Europäisches Patentamt

European Patent Office

Office européen des brevets

(11) Publication number: **0 400 797**
**A2**

# EUROPEAN PATENT APPLICATION

(21) Application number: **90304075.6**

(22) Date of filing: **17.04.90**

(51) Int. Cl.⁵: **G02F 1/155**

(30) Priority: **30.05.89 US 357919**

(43) Date of publication of application:
**05.12.90 Bulletin 90/49**

(84) Designated Contracting States:
**DE FR GB**

(71) Applicant: **FORD MOTOR COMPANY LIMITED**
**Eagle Way**
**Brentwood Essex(GB)**

(84) **GB**

Applicant: **FORD FRANCE S. A.**
**B.P. 307**
**F-92506 Rueil-Malmaison Cédex(FR)**

(84) **FR**

Applicant: **FORD-WERKE**
**AKTIENGESELLSCHAFT**
**Werk Köln-Niehl Henry-Ford-Strasse**
**Postfach 60 40 02**
**D-5000 Köln 60(DE)**

(84) **DE**

(72) Inventor: **Demiryont, Hulya**
**7259 Appoline, Dearborn**
**Michigan 48126(US)**

(74) Representative: **Messulam, Alec Moses et al**
**A. Messulam & Co. 24 Broadway**
**Leigh on Sea Essex SS9 1BN(GB)**

(54) **Electrochromic device.**

(57) An electrochromic device which comprises two electrode members located in substantially parallel planes spaced apart from each other, each electrode member comprising: (i) a bus bar (47,48), (ii) an electronically conductive electrode layer (34,38), and (iii) a series of fine, substantially uniformly spaced metal wires (40,40'.40",42) in contact with and radiating from said bus bar and being. adherent to a surface of said electronically conductive electrode layer (34,38), at least one (38) of the electrode layers of said two electrode members being transparent, and said fine, metal wires (42,42',42") adherent to said surface of one electrode layer (38) being positioned substantially parallel to and offset from said fine, metal wires (40,40',40")adherent to said surface of the other electrode layer (34).

FIG.2

## ELECTROCHROMIC DEVICES

The present invention relates to electrochromic devices which exhibit coloration and bleaching thereof due to an induced electric field. More particularly, this invention relates to electrochromic devices comprising two substantially parallel, spaced-apart electrode members having enhanced conducting paths provided by means of wires, adherent to an electrode layer located in the plane of the member, in a particular arrangement relative each other. ·

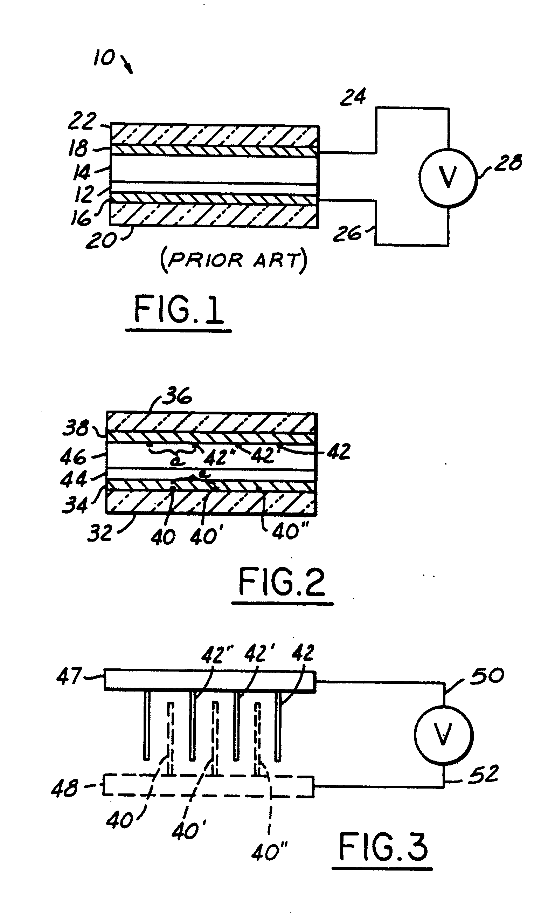

In an electrochromic device, a physical/chemical change is produced in response to an induced electric field. The result in a change in the reflective (or transmissive properties) of the device with respect to electromagnetic radiations, e.g., UV, visible and IR radiations. Such devices, one embodiment being shown as item 10 in Figure 1, generally comprise a film of electrochromic material 12 and an ion-conductive insulating layer 14 which functions as an electrolyte layer. The film and the electrolyte layer are in surface contact with each other for exchange of ions between the electrochromic film and the electrolyte layer. Two conductive electrode layers, 16 and 18 in Figure 1, at least one of them being transparent, are disposed on the opposite outer surfaces of the film and the electrolyte layer to provide means for applying a voltage across the combined thickness of the electrochromic film and the electrolyte layer. The electrode layers, 16 and 18 in Figure 1, are provided on substrates, 20 and 22 of Figure 1, which substrates may be of a material such as glass. Depending on the ion providing and ion storage capacity of ion conductive layer 16, a counter electrode located between ion conductive layer 14 and electrode layer 18 may be used. The electrodes are provided with external electrical leads 24 and 26 connected to a voltage providing source 28. Application of a voltage of proper polarity across the electrodes causes coloration of the electrochromic layer. By reversing the polarity of the applied voltage, the colored electrochromic layer will be uncolored (bleached). Changing from the bleached state to the colored state or from the colored state to the bleached state is termed "switching". The electrochromic material may be "persistent" in its colored state which means that it has the ability to remain, after removal of the electric field, in the absorptive state to which it is changed, as distinguished from a substantially instantaneous reversion to the initial state. The length of time a material is persistent is called its "open circuit memory" or simply "memory". Electrochromic devices of this type have been described for several uses, such as image display, for light filtering, etc. See, e.g., U.S. Patents Nos. 3,708,220, 4,194,812; 4,278,329; 4,645,308; 4,436,769; 4,500,878; 4,150,879; 4,652,090; 4,505,021; and 4,664,934.

In such devices, the electrochromic layer usually comprises an inorganic metal oxide material, most commonly a transition metal oxide, in particular: tungsten oxide. When tungsten oxide is the electrochromic material, the electrolyte layer is adapted to provide a positively charged light cation, preferably, a proton or a lithium ion. The electrolyte layer may be a liquid electrolyte solution like lithium perchlorate in propylene carbonate or a gel electrolyte like polyvinyl butyral-methanol doped with LiCl. The electrolyte may also be a solid electrolyte with comprises polymers or copolymers containing acidic groups such as polystyrene sulfonic acid, propylene oxide or polyethylene.

As mentioned above, at least one of the electrodes of an electrochromic device is a transparent electrode. When the device is used as a display device, one of the electrodes is transparent and segmented, e.g., so as to form an alphanumeric display, and the other electrode may be transparent or non-transparent. When it is desired that the electrochromic device be transparent, during at least some of its operation, however, it is necessary that both electrodes be transparent. Transparent electrodes may be made of a very thin film of a metal like gold. However the combined use of two such electrodes in an electrochromic device can significantly reduce the transmission of light through the device, making the device unsuitable for use in applications requiring high transparency, e.g., windows of buildings or automobiles. Transparent electrodes are generally thus made of non-metallic materials like tin oxide or indium oxide which provide for a high transmission device and have the further advantage of generally being more abrasion resistant than metal electrode materials. Transparent non-metallic electrodes, however, encounter lateral electrical resistance which decreases the speed and uniformity of charge distribution as the surface area of the electrochromic device increases. In order to overcome such problems, Greenberg et al, in U.S. Patent 4,768,865, propose employing a metal grid as at least one of the electrodes in the device. It is taught therein that the metal grid is disposed adjacent the substrate, which is preferably a transparent material like glass, and that the grid pattern may be square, rectangular or preferably is a pattern of interconnected circles for optimum optical properties. Even using this grid electrode in an electrochromic device, however, the charge distribution across the electrode layer is less than optimally uniform. This can be seen by the less than homogeneous coloring that takes place with a grid electrode and the less than ideal switching rate.

It would be desirable to provide electrodes with improved conductivity in order to effect homogeneous coloring of a electrochromic device and a faster switching rate for the device than those provided by prior art electrodes. The invention disclosed herein overcomes the problems of prior art electrodes.

The present invention is directed to an electrochromic device having improved electrode conductivity. The device comprises two electrode members located in substantially parallel planes spaced apart from each other, each electrode member comprising: (i) a bus bar, (ii) an electronically conductive electrode layer, and (iii) a series of fine, substantially uniformly spaced metal wires in contact with and radiating from the bus bar and being adherent to a surface of the electronically conductive electrode layer, at least one of the electrode layers of the two electrode members being transparent. The fine, metal wires adherent to the surface of one electrode layer are positioned substantially parallel to and offset from the metal wires adherent to the surface of the other electrode layer. Preferably, each bus bar is located (i) substantially perpendicular to metal wires radiating from the bus bar, (ii) near an edge of an electrode member, and (iii) transverse to the other bus bar. Hereinafter the combination of these specifically defined electrode members is termed "electrode system".

According to another aspect of the invention, the device comprises, in order, a substrate; one electrode member; colorable component; and another electrode member as described above. The colorable component may comprise a combination of individual layers, e.g., an ion conductive layer and an electrochromic material layer, or a single layer of materials which are adapted to provide coloration of the device upon application of a voltage across the electrode members.

Advantageously, it has been found that according to embodiments of the present invention, electrochromic devices can be constructed having electrodes with improved electric conductivity and which display uniform coloring and rapid switching.

The invention will now be described further, by way of example, with reference to the accompanying drawings, in which :

Figure 1 is a schematic representation of an electrochromic device, in cross-section, according to the prior art;

Figure 2 is a schematic representation, in cross-section, of an embodiment of an electrochromic device according to this invention, and

Figure 3 is an electrical schematic representation of the bus bars and wires as applies to the electrochromic device of Figure 2.

In this invention, a unique and advantageous electrode system for electrochromic devices is disclosed. The particular aspects of this invention are discussed in detail hereinafter.

The device comprises two electrode members located in substantially parallel planes spaced apart from each other. Each electrode member comprises: (i) a bus bar, (ii) an electronically conductive electrode layer and (iii) a series of fine, substantially uniformly spaced metal wires, located in the plane of the electrode member. The fine, substantially uniformly spaced metal wires are in electrical contact with and radiate from the bus bar and are adherent to a surface of the electronically conductive electrode layer. At least one of the electrode layers of the two electrode members is transparent. The fine, metal wires adherent to the surface of one electrode layer are positioned substantially parallel to and offset from the metal wires adherent to the surface of the other electrode layer.

As discussed herein, the electrochromic device generally comprises, in order, a substrate; one electrode member; a colorable component; and another electrode member. The colorable component may be, e.g., a layer of electrochromic material and a layer of an ion conductive material or a mixture thereof as disclosed in U.S. Patent 4,810,067. According to one embodiment of the device, it comprises two substrates and therebetween: one electrode member; an electrochromic material; an ion conductive material; and another electrode member, each electrode member being in contact with a respective one of the substrates. The invention will be further understood with reference to the embodiment of an electrochromic device as shown in Figures 2 and 3. Figure 2 is a cross-sectional view of an embodiment of this type of device taken along a line perpendicular to a surface of a substrate of the device. Figure 3 is an electrical schematic of the bus bars and wires as applies to the device of Figure 2. The relative sizes of the components of the device are not meant to suggest desired actual sizes. Rather, certain components are illustrated as being larger than desirable for clarity of illustration in the figures.

The device of Figure 2 comprises glass substrate 32 in contact with a layer of electrode material 34 and glass substrate 36 in contact with a layer of transparent electrode material 38. In the embodiment of the device shown in Figure 2, a series of fine, substantially parallel and uniformly spaced wires 40, 40$'$ and 40$''$ adherent to electrode material layer 34. The device further comprises a series of fine, substantially parallel and uniformly spaced wires 42, 42$'$ and 42$''$ adherent to electrode material layer 38. While the wires of the series 40, 40' and 40" of the embodiment of the device of Figure 2 are substantially parallel to one another, it is not necessary that the wires adherent to an electrode member be parallel. They could be arranged in various patterns, e.g., they could radiate in a fan shape from the bus bar 48. The same could be true of the series of wires in contact with the other bus bar. Optimal arrangement of the wires would be dependent in part, on the configuration of the device as will be apparent to one skilled in the art in view of the present disclosure.

In the embodiment shown in Figures 2 and 3, each pair of adjacent wires in the series of wires 40, 40' and 40" are separated by substantially the same distance "a". Similarly, in the series of wires 42, 42' and 42" each pair of adjacent wires are separated by substantially the same distance "a". Additionally, the fine, parallel wires 40, 40' and 40" are positioned substantially parallel to and offset from fine, parallel wires 42, 42' and 42" in the assembled device. That is, rather than the wires being directly across from each other, it has been found necessary to position the wires in an offset pattern so that a wire of the 40 series would not generally be directly across from a wire of the 42 series in the device. Wire 40' is thus positioned so as to be between wires 42' and 42" as shown in Figures 2 and 3. While it is preferable that wire 40' is positioned about half-way between wires 42' and 42" in the device, it is not necessary that it be so positioned. Wire 40' merely needs to be positioned offset (between) wires 42 and 42". The device of Figure 2 further comprises a layer of electrochromic material 44 and a layer of ion conductive material 46. As described herein, these materials can be admixed to form a composite layer.

If the wires of the two electrode members were directly opposite one another, an electric field vector could be expected to be present between them. This electric field vector would be perpendicular to the parallel planes containing the electrode layers and would thus not be expected to have a lateral component vector in the plane of this electrode layer. By arranging the wires in such an offset pattern with respect to the wires of the other electrode member, however, the electric field vector between two nearby offset wires would not be perpendicular to the parallel planes containing the electrode layers. It is believed that, in this offset situation, a component of the electric field vector exists in the plane (surface) of the electrode layer. It is believed that this component of the electric field in the surface of the electrode layer aids in distributing the charge in the electrode layer. This theory has been advanced in an attempt to explain the unexpected advantages offered by the electrode system of this invention. Neither its validity nor understanding is necessary, however, for the practice of this invention.

The wires of the electrode members may also be positioned on the other surface of the electrode layer, that is, in the embodiment of the device shown in Figure 2, fine wires 42, 42' and 42" could be positioned adherent to the face of electrode layer 38 adjacent substrate 36. Similarly, fine wires 40, 40' and 40" could be positioned adherent to the face of electrode layer 34 adjacent substrate 32. Positioning the metal wires in this way protects the wires from chemical interaction which may take place between the wires and the electrochromic material and electrolyte material. In effect, the electrode layers according to this embodiment would not only function as electrodes but also act as a chemically protective layer for the fine wires.

The electrode system of this invention further comprises two bus bars, one provided individually in the plane of each electrode member so that it contacts metal wires adherent to the electrode layer of that member. One arrangement of the bus bars 47 and 48 and the wires 40, 40', 40" and 42, 42' and 42" is shown in Figure 3. The individual bus bars preferably would be provided near an edge of each electrode layer in contact with and perpendicular to an end portion of the fine wires. Thus the bus bars preferably would be arranged so as to be substantially parallel and transverse to one another as shown in this figure. By traverse to one another is meant that a bus bar provided on one electrode layer is not at the same end of the assembled device as is the other bus bar (on the other electrode layer). They could be made of any electronically conducting material, such as silver, copper, etc. They would generally extend the length of the edge of the device should coloration be desired in the entire device. It is preferred according to the embodiment of this invention shown in Figure 2 that the ends of the fine wires (adherent to one electrode layer and not contacted by the bus bar) not extend into the region opposite the bus bar of the other electrode member. That is, the wires are shorter than the lateral distance between the two bus bars as shown in Figure 3.

During operation of the device, according to the embodiment shown in Figures 2 and 3, a voltage is applied across the electrodes by means of leads 50 and 52 connected to bus bars 47 and 48, the leads being connected to a d.c. voltage source 54. In the embodiment of Figure 2, electrochromic layer 44 comprises a cathodic electrochromic material like tungsten oxide. Assuming that this layer was colorless when deposited on electrode layer 38, a voltage of negative polarity applied to electrode layer 38 would cause the material to change from colorless to blue, i.e., from its bleached to colored state.

As would be apparent to those skilled in the art in view of the present disclosure, the electrode system of this invention is applicable to any electrochromic device. Such devices may comprise other components, e.g., counter electrodes, a second electrochromic layer, insulating material layers like polyvinyl, a UV absorbing layer etc. Counter electrodes are generally employed between the ion conductive material and an adjacent electrode of the device (i.e., between material 46 and layer 36 including wires 42 of Figure 2) to improve operation of the device. A counter electrode may be formed of, e.g., $WO_3$ doped with and alkali metal ion. This material is generally not meant to be electrochromic. Still further, the devices could be mirrored devices by application of a reflective layer on, e.g., the outside surface of one of the substrates. Additionally it is imagined that the device may be of various configurations and designs. Still other adaptions of the device and method of this invention will be apparent to those skilled in the art in view of the disclosure. While conventional electrochromic devices generally comprise layers of material, e.g., electrochromic material and electrolyte between substrates as embodied in the Figure 2 device, this invention is not so limited. It may comprise a single colorable component and it may comprise two substrates or one substrate. Clearly, the use of two substrates such as glass would generally have added environmental durability over similar devices having only one substrate. In such embodiments, a resin layer or coating could be applied, if desired, in place of another substrate to enhance the durability of the device. Use of such a protective layer is not however necessary. The electrode member may have sufficient durability for the intended application of the device.

The substrate employed in the device may comprise any material which is stable at the temperatures and under the conditions of the fabrication and use of the device. Commonly used materials for the substrates of such devices include, e.g., glass, quartz, plastic, and the like and a suitable combination of any of them. At least one of the substrates will be at least translucent, preferably being transparent. Selection of the optimal material to be used for one or both substrates of the device will be apparent to one skilled in the art in view of this disclosure.

The material used for the electrode layer of the electrochromic device of this invention may be any material which is electronically conductive. At least one of the electrode-substrate combinations is transparent, although both may be. If it is intended that the electrode be a light transmitting electrode, there may be used a light transmitting film of an electrically conductive metal oxide such as doped or undoped tin oxide, indium oxide, zinc oxide and the like. The thickness of the transparent electrode layer generally falls within the range of 200 nm to several microns, correspondingly varying in transparency and resistance.

The transparent electrode layer may be formed on the substrate by any known technique, including vacuum evaporation, chemical vapor deposition, sol-gel deposition, ion plating, reactive sputtering, etc. The transparent electrode layer may be formed by the so-called thick film processes such as screen printing or coating. When the thick batch film process are used, (1) a paste containing metal compound micro particles or (2) a solution of an organic metal compound such as metal alcoholate or its oligomer is coated and sintered to form the transparent electrode layer. Preferably, the transparent electrode material is tin oxide doped with fluorine. The non-transparent electrode material selected from light-reflecting electrode materials (e.g., Al, Ag, Pt, Cu or Ni) or other electrode materials (e.g., Au, Pd, Cr, Ir, Ru, Rh or C) as well as compatible mixtures thereof.

The fine, substantially uniformly spaced metal wires adherent to the electrode layers may be made of any electrically conducting metal, such as those listed above for the non-transparent electrode layer, or compatible alloys thereof. The metal wires are not limited to "wires" of the conventional type, i.e., having a circular cross-section. That is, the wires of this invention may have an oval cross-section or even have a rectangular or square cross-section. Wires having a rectangular or square cross-section are more adapted to provide a satisfactory contact between the wire and the electrode layer. Selection of the preferable shape of the wire will be apparent to those skilled in the art in view of the present disclosure. The diameter, the shape and spacing of the wires relative to one another can vary substantially. It is only required that the wires adherent to one electrode layer are offset from wires of the other electrode member and that the combination of the electrode layer and fine wires allow the electrode member to have the desired transparency. The optimal diameter (thickness) of the wires and the optimal distance at which they are spaced (as in Figures 2 and 3) will depend on such factors as, e.g., the distance between the electrode layers, the particular electrochromic and ion-conductive materials being used, the ionic conductivity of the ion-conductive material, and the desired physical properties of the device, transmittance, switching time, etc. Selection of the optimal wire material, cross-section dimensions and shaping of the wire, the spacing between adjacent wires and the pattern in which the wires are arranged will be within the skill of one in the art in view of the present disclosure. The wires adherent to the electrode layer may be provided by any technique including, e.g., silk screening. Silk screening of the wires has been found to provide "wires" which are very adherent to the layer on which they are applied, be it the electrode layer or, e.g., the substrate. Still other techniques which may be employed will be apparent to those skilled in the art in view of the present disclosure.

The electrochromic material useful in embodiments of the electrochromic device of the invention may be selected from any electrochromic material, many of which are well known to those skilled in the art and are commercially available. Cathodic electrochromic materials include non-stoichiometric (i.e., oxygen deficient) metal oxides wherein the metal has variable oxidation states. Exemplary of such cathodic electrochromic materials useful in this invention are those selected from the group comprising tungsten oxide, molybdenum oxide, vanadium oxide, titanium oxide, lead oxide, and bismuth oxide and compatible mixtures of any of them. Anodic electrochromic materials which may be used in this invention include full oxidized compounds comprising metal wherein the metal has variable oxidation states. Exemplary of such anodic electrochromic materials are iridium oxide, and nickel hydroxide and compatible mixtures of any of them. Preferred electrochromic materials for use in electrochromic devices of this invention include non-stoichiometric, oxygen deficient tungsten oxide as the cathodic electrochromic material and fully oxidized iridium oxide as an anodic electrochromic material. The electrochromic material may also comprise metal salt electrochromic materials as disclosed in U.S. patent application Serial No. 338,261 commonly assigned herewith, entitled "Electrochromic Devices Comprising Metal Salts In An Ion Conductive Material" to Demiryont.

Usually, when the electrochromic material is used in a layer (rather than being admixed with the ion-conductive material), the thickness of the electrochromic layer is between about 0.1 and 100 microns. However, since a small potential will provide an enormous field strength across very thin films, films of 0.1-10 microns thickness are preferred over thicker ones. Optimal thickness also will be determined by the material of the film. The electrochromic layer may be provided on the electrode layer by any suitable technique, for example, by vacuum deposition, chemical vapor deposition, electrolytic, thermal evaporation, sputtering sol-gel deposition, and the like. Selection of the optimal electrochromic material and method of its deposition will be apparent to those skilled in the art in view of the present disclosure.

The ion conductive material useful in embodiments of the invention is adapted to contain ions or include an ion source for emitting ions upon application of a voltage across the electrode layers.

The ion conductive material (often referred to as the electrolyte) can be selected from a wide variety of materials. Exemplary of dielectric materials useful as the ion conductive material are tantalum oxide ($Ta_2O_5$), niobium oxide ($Nb_2O_5$), zirconium oxide ($ZrO_2$), titanium oxide ($TiO_2$), hafnium oxide ($HfO_2$), alumina ($Al_2O_3$), yttrium oxide ($Y_2O_3$), lanthanum oxide ($La_2O_3$), silicon oxide ($SiO_2$), magnesium fluoride, lithium nitrate ($Li_3N$), zirconium phosphate, or a mixture thereof. Such material would generally be doped with an ion providing material or the device provided with a counter electrode (located between the ion conductive material and an adjacent electrode member) doped with an ion providing material. Exemplary of solid electrolytes useful as the ion conductive material are sodium chloride, potassium chloride, sodium bromide, potassium bromide, $Na_3Zr_2Si_2PO_{12}$, $Na_{1+x}ZrSi_xP_{3-x}O_{12}$, $Na_5YSi_4O_{12}$, or $RbAg_4I_5$. The ion conductive material also may be a water or proton source-containing synthetic resin copolymer of b-hydroxyethyl methacrylate with 2-acrylamide-2-methylpropane sulfonic acid, a hydrate vinyl copolymer (e.g., a hydrate methyl methacrylate copolymer), or a hydrate polyester. The ion conductive material, when used as a layer with a layer of electrochromic material, also can be an electrolytic solution of an acid (e.g., sulphuric acid, hydrochloric acid, phosphoric acid, acetic acid, butyric acid, or oxalic acid) or an aqueous solution thereof, an aqueous solution of an alkali (e.g., sodium hydroxide or lithium hydroxide), or an aqueous solution of a solid strong electrolyte (e.g., sodium hydroxide, lithium chloride, potassium chloride, or lithium sulfide. Exemplary of semi-solid gel electrolytes useful as the ion conductive material are those, for example, obtained by gelling an electrolytic aqueous solution with a gelling agent (e.g., polyvinyl alcohol, CMC, agaragar or gelatin). Preferably, the ion conductive material is selected from a material which comprised alkali metal compounds. Most preferably, such compounds are selected from nitrate salts and chloride salts of alkali metal compounds. The alkali metal in such compounds are preferably selected from lithium, potassium and sodium. Selection of the optimal ion conductive material would be apparent to one skilled in the art in view of this disclosure. As discussed herein, the electrochromic material and ion conductive material may be present in the electrochromic device as distinct layers or as a single layer comprising a mixture of these materials. As is known to those skilled in the art, the thickness of an ion conductive layer or mixed electrochromic-ion conductive layer may vary, optimal thickness being dependent on such considerations as desired maximum intensity of the color, type of ion conductive material, configuration of the device, etc.

The invention will be further understood by referring to the following detailed examples. It should be understood that the subject examples are presented by way of illustration and not by way of limitation.

Example 1

This example describes nonuniform coloring observed in an electrochromic not according to this invention. The nonuniform coloring resulted from the limited electrical conductivity of conventional transparent electrodes employed in the device of the example.

An electrochromic device was constructed along the lines of the prior art device shown in Figure 1 as follows. A 187 nm thick layer of fluorine doped tin oxide, having 37 ohm/square sheet resistance, was deposited on a 6" X 12" glass substrate to provide a transparent electrode layer/glass substrate composite. Subsequently, a .300nm thick film of tungsten oxide electrochromic material was deposited on the electrode layer. A 0.1 mm thick layer of LiCl (0.5% by weight) doped polyvinyl butyral (Monsanta B90) and methanol mixture (80%/20% by volume, respectively) having a $3 \times 10^{-3}$ (ohm cm)$^{-1}$ ionic conductivity was deposited on the tungsten oxide to provide an electrolyte layer. Another electrode layer/glass composite was prepared as above. The electrode layer was placed in contact with the electrolyte layer to form the electrochromic device. The device was transparent and colorless.

In order to color the device, a voltage was applied across the electrode layers by means of wires connected by alligator clips to the electrode layers near one edge of the device. In particular, a -3 volts was applied to the electrode layer near the $WO_3$ side and +3 volts to the other side of the device. Even after application of the voltage for 30 minutes, the device was nonuniform in color. That is, the electrochromic material started to color near the electrical contact with the electrode layer and then diffused toward the opposite end of the device. The far end edge of the device, i.e., most remote from the electrical contact points, however, stayed pale (colorless) during the entire time the voltage was applied. The bleaching of the device occurred when the polarity of applied voltage was reversed. Bleaching began in the deeply colored contact area, and the device continued bleaching as long as the voltage was applied. It was noted that the speed at which the device colored was faster than the speed at which the device bleached.

A device similar in design to that of Example 1 was constructed except that, in addition to the electrode layers of the Example 1 device, fine parallel wires are provided between each electrode layer and the adjacent substrate. The parallel wires were spaced so that the space between adjacent wires became progressively smaller in going from one side of an electrode layer to the other side. The sides of the electrode layers which had the wires which were spaced further apart were placed at the same end of the device and parallel to one another. At this end of the device, the wires adherent to one electrode layer were offset from the wires adherent to the other electrode layer. At the other end of the device, where the wires were closer together, the wires adherent to one electrode layer were not offset from the wires adherent to the other electrode layer. The wires adherent to one electrode layer were in contact with a bus bar made of silver provided at the edge of the layer, the bus bar being perpendicular to the wires. Similarly, the wires adherent to the other electrode layer were in contact with a bus bar made of silver provided at the edge of that layer, the wires and bus bar being perpendicular to each other. The two bus bars were located transverse to one another.

When a voltage of -3 volts was applied to the bus bar located near the electrochromic material layer and +3 volts to the bus bar of the other electrode, the device colored uniformly and rapidly (as compared to the device of Example 1) near the end of the device having the offset wires adherent to the electrode layers. By uniform coloring is meant that the entire region of the electrochromic layer near this end of the device developed a color at the same time and the color got darker consistently throughout the region. The end of the device having the wires substantially across from one another (i.e., they were not offset) did not color uniformly. At that end of the device, only the portion of the electrochromic layer immediately between the opposite wires colored deeply so that stripes of colored electrochromic material were visible with poorly colored regions between them. This example showed the advantage of using wires adherent to the electrode layers which were offset with respect to the parallel wires adherent to the other electrode. By reversing the polarity of the applied voltage, the device bleached. The bleaching at the offset end of the device took place rapidly and uniformly as compared to the bleaching at the nonoffset end of the device.

The following two examples show the color uniformity not only depends on geometrical factors but also material properties used in the device.

Example 2

Example 3

This example shows how the rate of coloring depends on the ionic conductivity of the electrolyte. An electrochromic device is assembled as in Example 2 except that the wires are spaced uniformly apart from one another and wires on the respective electrode members are offset from one another according to the present invention. The spacing of the wires from one another is like that of the wires at the offset end of the Example 2 device. Additionally, the conductive ion doping level of the gel electrolyte is lower than that of Example 2. In particular, the LiCl concentration used in this device, is 0.1% by weight which provides the electrolyte with an ionic conductivity of $10^{-5}$ (ohm cm)$^{-1}$. When a voltage is applied to the conductive bus bars to color the device as in Example 2, a very uniform coloration is observed, however, the coloration proceeds at much slower coloring rate than in the offset end of the device given in Example 2. When electrode polarity was reversed a uniform bleaching was observed, again with a slower rate than that of the offset end of the device of Example 2.

Example 4

This example shows how electrical characteristics of the electrode layer effects the coloring-bleaching of the device. An electrochromic device is assembled as in Example 2 except that the wires are spaced uniformly apart from one another and wires on the respective electrode members are offset from one another according to the present invention. The spacing of the wires from one another is like that of the wires at the offset end of the Example 2 device. Additionally, the thickness of the electrode layers is individually increased to .800nm. This makes each electrode layer more conductive: 5ohm/square of sheet resistance, as compared to the electrode layers of Example 2. A faster coloring-bleaching is observed when % 3 volt is applied across the device as compared to that of the offset end of the device of Example 2. The coloring-bleaching is uniform as in the offset end of the device of Example 2.

Example 5

This example shows the disadvantages of using wires adherent to each electrode which are not parallel to each other. An electrochromic device was constructed as in Example 1 except that a silver wire, parallel to an edge of the device and located in the center of the electrode layer surface opposite the glass substrate, was additionally provided. The device was assembled so that the two wires (one adherent to each electrode layer) were crossed with respect to the other. When % 3 volts were applied to the wires, coloring started from the crossed region and nonuniform coloring developed. The silver wire (which is adherent to the anode) dissolved in the electrolyte due to a counter electrode reaction occurring at the lower voltage. A device similar to that described above was constructed except that evaporated Cu wires .80nm thick were used located between the glass and the electrode layer in order to insulate the metal wires from the electrolyte and electrochromic material. When a % 3 volts was applied to the wires, coloring started from the crossed region and nonuniform coloring was again observed with the crossed conductive paths. Dissolution of the Cu was not however observed.

Claims

1. An electrochromic device which comprises two electrode members located in substantially parallel planes spaced apart from each other, each electrode member comprising: (i) a bus bar (47,48), (ii) an electronically conductive electrode layer (34,38), and (iii) a series of fine, substantially uniformly spaced metal wires (40,40$'$.40$''$,42, 42$'$ 42$''$) in contact with and radiating from said bus bar and being adherent to a surface of said electronically conductive electrode layer (34,38), at least one (38) of the electrode layers of said two electrode members being transparent, and said fine, metal wires (42,42$'$,42$''$) adherent to said surface of one electrode layer (38) being positioned substantially parallel to and offset from said fine, metal wires (40,40$'$,40$''$)adherent to said surface of the other electrode layer (34).

2. A device according to claim1, wherein each bus bar is located (i) substantially perpendicular to metal wires radiating therefrom, (ii) near an edge of said electrode member, and (iii) transverse to the other bus bar.

3. A device according to claim 1, wherein each of said electrode layers are individually selected from electrode material consisting essentially of doped or undoped (a)tin oxide, (b) indium oxide, (c) indium tin oxide, (d) zinc oxide, and (e) mixtures of any of them.

4. A device according to claim 1, wherein said fine metal wires are individually selected from metal of the group consisting essentially of Al, Ag, Pt, Ni, Au, Pd, Cr, Ir, Ru, Rh, Cu as well as compatible alloys thereof.

5. A device according to claim 1, wherein said fine metal wires adherent to said one electrode layer are positioned about half-way between an opposite pair of fine wires adherent to said other electrode layer.

6. A device according to claim 1, wherein one of said electrode layers is selected from electrode material consisting essentially of doped or undoped (a)tin oxide, (b) indium oxide, (c) indium tin oxide, (d) zinc oxide, and (e) mixtures of any of them.

7. A device according to claim 6, wherein the other of said electrode layers is selected from materials selected from the group consisting essentially of Al, Ag, Pt, Ni, Au, Pd, Cr, Ir, Ru, Rh, Cu , C as well as compatible mixtures thereof.

8. A device according to any one of the preceding claims which comprises two substrates and therebetween, one of said electrode members, an electrochromic material, an ion conductive material, and other of said electrode member.

9. A device according to claim 8, wherein the said electrochromic material is selected from tungsten oxide, molybdenum oxide, copper oxide, cobalt oxide, lead oxide, bismuth oxide, iridium oxide and nickel hydroxide.

10. A device according to claim 8, wherein said ion conductive material is selected from materials comprising hydrogen ions and from materials comprising alkali metal compounds, said ion conductive material being adapted to communicate ions to and from said electrochromic material upon application of a voltage across said electrode members.

11. A device according to claim 10, wherein said alkali metal compounds are selected from compounds comprising nitrates and chlorides of alkali metals.

12 . A device according to claim 8, wherein said ion conductive material is selected from a solid material or a gel material.

13. A device according to claim 8, wherein the said electrochromic material and said ion conductive material are present as distinct layers.

14. A device according to claim 8, wherein said electrochromic material and said ion conductive material are employed between said electrode layers as a single layer comprising a mixture of said electrochromic material and said ion conductive material.

15. A device according to Claims 1 or 2, which comprises, in order, a substrate, one of said electrode members, colorable component and other of said electrode members.

(PRIOR ART)

FIG.1

FIG.2

FIG.3